# EUROPÄISCHE PATENTANMELDUNG

(11) **EP 0 669 458 A1**
(43) Veröffentlichungstag der Anmeldung: **30.08.1995**
(21) Anmeldenummer: 95100923.2
(22) Anmeldetag: 24.01.1995
(51) Int. Cl.: F02M 31/16, F02M 37/22

(54) **Vorrichtung zur Erwärmung des Kraftstoffs für Dieselmotoren**

(30) Priorität: 24.02.1994 AT 382/94
(71) Anmelder: Riegler, Wolfgang, A-5421 Adnet (AT)
(72) Erfinder: Riegler, Wolfgang, A-5421 Adnet (AT)
(74) Vertreter: Haft, von Puttkamer, Berngruber, Czybulka

(57) **Zusammenfassung**

Eine Vorrichtung zur Erwärmung des Kraftstoffs für Dieselmotoren wird durch einen vom Kühlmittel durchflossenen Hohlkörper (7) gebildet, der eine halbzylindrische, an der zylindrischen Außenwand (4) des Filtergehäuses (3) anliegende Innenwand (8) aufweist.

## Beschreibung

Die Erfindung bezieht sich auf eine Vorrichtung zur Erwärmung des Kraftstoffs für Dieselmotoren nach dem Oberbegriff des Anspruchs 1.

Eine derartige Vorrichtung ist aus der US-A-4,372,260 bekannt. Die bekannte Vorrichtung besteht im wesentlichen aus einem Doppelmantelzylinder, der zwischen dem Filterkopf und dem Filter angeordnet ist. Der Doppelmantelraum, in dem eine vom heißen Kühlwasser des Motors durchflossene Heizspirale angeordnet ist, ist mit den Kraftstoffeinlaßöffnungen des Filters verbunden und wird von dem von der Kraftstoffpumpe gelieferten Kraftstoff durchflossen. Durch ein Zentralrohr im Inneren des Doppelmantelzylinders strömt der erwärmte Kraftstoff vom Filter zum Motor. Mit einer oberen und einer unteren Endplatte mit Dichtungen ist der Doppelmantelzylinder mit dem Filter und dem Filterkopf verbunden. Die bekannte Vorrichtung weist einen verwickelten Aufbau auf. Auch ist sie nur bei wenigen Filtern nachträglich einbaubar.

Aufgabe der Erfindung ist es, eine einfach aufgebaute Vorrichtung zur Erwärmung des Kraftstoffs bereitzustellen, die sich bei fast allen Kraftstoffiltern für Dieselfahrzeuge nachträglich einbauen läßt.

Dies wird erfindungsgemäß mit der im Anspruch 1 gekennzeichneten Vorrichtung erreicht. In den Unteransprüchen sind vorteilhafte Ausgestaltungen der Erfindung wiedergegeben.

Die erfindungsgemäße Vorrichtung läßt sich bei fast allen Kraftstoffiltern nachträglich einbauen. Die einzige Variante ist der Durchmesser des Filtergehäuses. D. h., wenn nach der Erfindung für die am häufigsten verwendeten Filterdurchmesser Hohlkörper gebaut werden, kann die Heizung nachträglich an allen Dieselfahrzeugen angebracht werden, ohne daß am Filter etwas geändert werden muß.

Der Kraftstoffilter ist im allgemeinen in geringem Abstand vom Motor angeordnet. Andererseits ist auf der vom Motor abgewandten Seite des Kraftstoffilters im Motorraum im allgemeinen ein freier Raum. Demgemäß wird der Hohlkörper erfindungsgemäß vorzugsweise auf der vom Motor abgewandten Seite des Kraftstoffiltergehäuses im Motorraum angeordnet.

Durch die vollflächige Anlage der halbzylindrischen Innenwand des Hohlkörpers an der zylindrischen Außenwand des Filtergehäuses ist ein hoher Wärmeübergang sichergestellt. Um den Wärmeübergang vom Hohlkörper auf das Filtergehäuse zu erhöhen, besteht die halbzylindrische Innenwand vorzugsweise aus einem Material hoher Wärmeleitfähigkeit, also z. B. einem Metall, vorzugsweise Kupfer, während die übrigen Wände des Hohlkörpers vorzugsweise weniger wärmeleitend ausgebildet sind, beispielsweise durch Verwendung von Materialien mit geringer Wärmeleitfähigkeit oder durch zusätzliches Aufbringen von Wärmeisoliermaterial.

Die Innenwand des Hohlkörpers ist normalerweise halbzylindrisch. D. h., der Kreisbogen darf nicht größer als 180_{°} sein. Er kann jedoch kleiner als 180_{°} sein, z. B. 120_{°}. Freilich geht dies zu Lasten des Wärmeübergangs.

Die erfindungsgemäße Vorrichtung besteht aus der halbzylindrischen Innenwand, zwei Seitenwänden, einer Außenwand sowie einer oberen und einer unteren Wand. Diese sechs Wände können z. B. alle aus Metall bestehen und durch Schweißen oder Löten miteinander verbunden sein. Um eine möglichst lange Verweilzeit des heißen Kühlwassers oder sonstigen flüssigen Kühlmittels im Hohlkörper sicherzustellen, sind der Zufluß und der Abfluß vorzugsweise an gegenüberliegenden Wänden angebracht. Der Aufbau der erfindungsgemäßen Vorrichtung ist damit einfach und deren Herstellungsaufwand gering.

Mit der erfindungsgemäßen Vorrichtung heizt also das von der Abwärme des Motors erwärmte Kühlwasser den Kraftstoffilter auf. Die Wassertemperatur beträgt im allgemeinen zwischen 80 und 90 °C. Der Wärmeübergang erfolgt über die zylindrische Innenwand auf den Kraftstoffilter.

Wenn bei größeren Dieselmotoren zwei Kraftstoffilter unmittelbar nebeneinander angeordnet sind, kann die erfindungsgemäße Vorrichtung an beiden Kraftstoffiltern angeordnet werden.

Durch die permanente Kraftstofferwärmung wird der Kraftstoffverbrauch deutlich herabgesetzt. Darüberhinaus tritt eine geringere Rußbildung auf. Auch wird die Zündfähigkeit und die Zündwilligkeit des Dieselmotors verbessert. Dies schlägt sich in einer höheren Motorlebensdauer sowie in größeren Ölwechselintervallen nieder. Beim Betrieb bei tiefen Temperaturen verhindert der mit der erfindungsgemäßen Vorrichtung angewärmte Kraftstoffilter außerdem ein Versulzen und gewährleistet damit auch bei tiefsten Temperaturen eine problemlose Verbrennung.

Nachstehend ist eine Ausführungsform der erfindungsgemäßen Vorrichtung anhand der Zeichnung näher erläutert. Darin zeigen:
Fig. 1 eine Seitenansicht eines Kraftstoffilters mit der erfindungsgemäßen Vorrichtung; und
Fig. 2 einen Schnitt entlang der Linie 11-11 in Fig. 1.

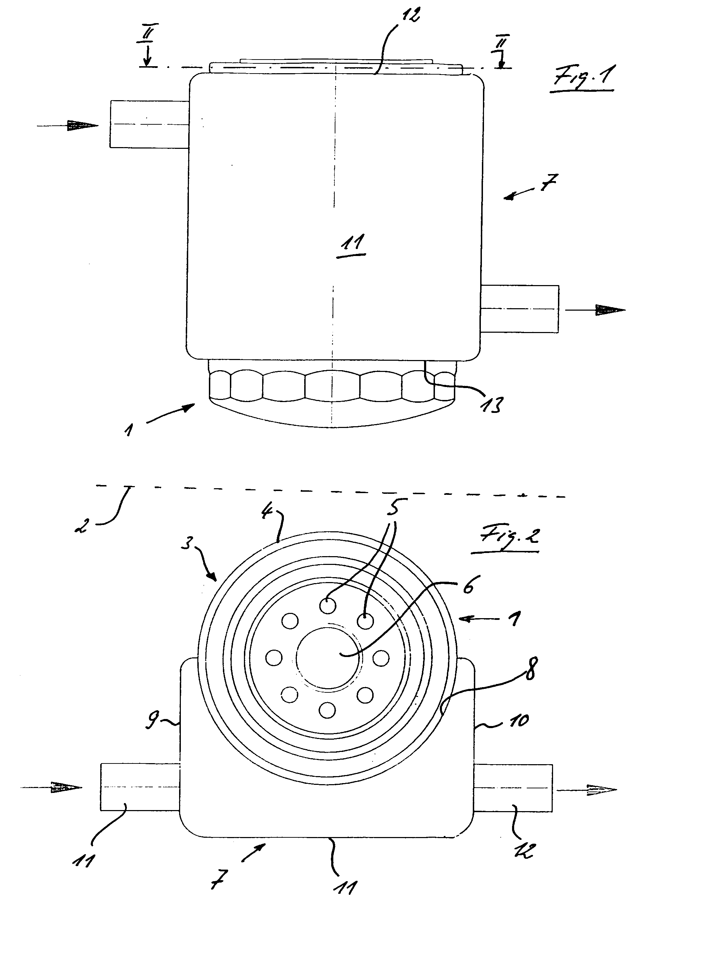

Danach ist ein Kraftstoffilter 1 mit geringem Abstand an dem in Fig. 2 gestrichelt angedeuteten Dieselmotor 2 angeordnet.

Der Kraftstoffilter 1 weist einen herkömmlichen Aufbau auf, d. h. ein Gehäuse 3 mit einer zylindrischen Außenwand 4, Kraftstoffeinlaßöffnungen 5, über die der von der Kraftstoffpumpe kommende Dieselkraftstoff in das Gehäuse eintritt und eine Auslaßöffnung 6, über die der Kraftstoff aus dem Gehäuse 3 austritt. In dem Gehäuse 3 ist ein nicht dargestelltes Filterelement angeordnet. Von der Auslaßöffnung 6 strömt der gefilterte Kraftstoff über eine nicht dargestellte Kraftstoffleitung zum Motor.

Zur Erwärmung des Dieselkraftstoffs in dem Filter 1 ist ein Hohlkörper 7 vorgesehen, der aus einer halbzylindrischen Innenwand 8, zwei planen Seitenwänden 9, 10, einer planen Außenwand 11 und einer planen oberen Wand 12 sowie einer planen unteren Wand 13 besteht. Die Seitenwände 9, 10 sind tangential zur halbzylindrischen Innenwand 8 angeordnet. Die beiden Seitenwände 9, 10 sowie die obere Wand 12 und die untere Wand 13 sind planparallel zueinander angeordnet. Die Außenwand 11 verläuft rechtwinklig zu den Seitenwänden 9, 10 sowie der oberen Wand 12 und unteren Wand 13. D. h., abgesehen von dem tangentialen Verlauf der Seitenwände 9, 10 zur halbzylindrischen Innenwand 8 stoßen alle Wände 8 bis 12 rechtwinklig aufeinander, so daß der Hohlkörper 7 insgesamt einen Quader bildet, mit der halbzylindrischen Innenwand 8 als konkaver Ausnehmung.

Der Hohlkörper 7 ist auf der vom Dieselmotor 2 abgewandten Seite des Kraftstoffiltergehäuses 3 angeordnet (Fig. 2).

Der Hohlkörper 7 ist an der Seitenwand 9 im oberen Bereich mit einem Zuflußstutzen 11 versehen, und an der gegenüberliegenden Seitenwand 10 im unteren Bereich mit einem Abflußstutzen 12. Über dem Zuflußstutzen 11 wird dem Hohlkörper das z. B. auf 80 bis 90 _{°} C erwärmte Kühlwasser oder sonstige Kühlmittel des Kühlsystems des Motors 2 zugeführt. Über den Abflußstutzen 12 strömt es in das Kühlsystem zurück.

Der Außenradius der zylindrischen Außenwand 4 des Filters 1 und der Radius der halbzylindrischen Innenwand 8 entsprechen einander, so daß die halbzylindrische Innenwand 8 vollflächig an der Außenwand 4 des Kraftstoffilters 1 anliegt. Durch diese vollflächige Anlage der z. B. aus Kupfer bestehenden Innenwand 8 des Hohlkörpers 7 an der Außenwand 4 des Filters 1 wird die Wärme des erwärmten Kühlmittels mit einem hohen Wirkungsgrad auf das Kraftstoffiltergehäuse 3 übertragen und damit der Kraftstoff, der das Filter 1 durchströmt, erwärmt.

Die Wände 8 bis 12 können beispielsweise alle aus Metall bestehen, vorzugsweise Kupfer, und miteinander verlötet oder verschweißt sein. Die Wandungen 9 bis 12 können ganz oder teilweise mit einem Wärmeisoliermaterial bedeckt sein.

Wenn zwei Filtergehäuse mit geringem Abstand nebeneinander angeordnet sind, wie bei manchen Lastkraftwagen und schweren Dieselmotoren der Fall, können zwei Hohlkörper 7 nebeneinander angebracht werden. Auch ist es möglich, einen Hohlkörper zu verwenden, der zwei nebeneinander angeordnete halbzylindrische Innenflächen aufweist, die an der zylindrischen Außenwand des einen bzw. anderen Filters vollflächig anliegen.

## Patentansprüche

1. Vorrichtung zur Erwärmung des Kraftstoffs für Dieselmotoren mit einem am zylindrischen Kraftstoffiltergehäuse angeordneten, vom Kühlmittel durchflossenen Hohlkörper, dadurch gekennzeichnet, daß der Hohlkörper (7) eine maximal halbzylindrische, an der zylindrischen Außenwand (4) es Filtergehäuses (3) anliegende Innenwand (8) aufweist.

2. Vorrichtung nach Anspruch 1, dadurch gekennzeichnet, daß der Hohlkörper (7) an der vom Dieselmotor (2) abgewandten Seite des Kraftstoffiltergehäuses (3) angeordnet ist.

3. Vorrichtung nach Anspruch 1 oder 2, dadurch gekennzeichnet, daß der Hohlkörper (7) quaderförmig ausgebildet ist, wobei die halbzylindrische Innenwand (8) eine konkave Ausnehmung an der dem Filtergehäuse (3) zugewandten Seite des quaderförmigen Hohlkörpers (7) bildet.

4. Vorrichtung nach einem der vorstehenden Ansprüche, dadurch gekennzeichnet, daß zumindest die an der Außenwand (4) des Filtergehäuses (3) anliegende Innenwand (8) des Hohlkörpers (7) aus Metall besteht.

5. Vorrichtung nach Anspruch 4, dadurch gekennzeichnet, daß das Metall Kupfer ist.
